# EUROPÄISCHE PATENTSCHRIFT

(11) **EP 0 762 959 B1**
(45) Veröffentlichungstag und Bekanntmachung des Hinweises auf die Patenterteilung: **07.01.1999**
(21) Anmeldenummer: 95920697.0
(22) Anmeldetag: 29.05.1995
(51) Int. Cl.: B60Q 1/26

(54) **EINSATZFAHRZEUG MIT EINER BELEUCHTUNGSEINRICHTUNG**
EMERGENCY VEHICLE WITH LIGHTING DEVICE
VEHICULE D'INTERVENTION A DISPOSITIF D'ECLAIRAGE

(30) Priorität: 30.05.1994 AT 1105/94
(43) Veröffentlichungstag der Anmeldung: 19.03.1997
(73) Patentinhaber: Rosenbauer International Aktiengesellschaft, 4060 Leonding (AT)
(72) Erfinder: GLATZMEIER, Alfred, A-4033 Linz (AT); HOCHDANINGER, Franz, A-4821 Lauffen (AT)
(74) Vertreter: Secklehner, Günter, Dr.
(86) Internationale Anmeldenummer: AT9500106
(87) Internationale Veröffentlichungsnummer: WO9532875

(56) Entgegenhaltungen:
- EP-A- 0 365 937

## Beschreibung

Die Erfindung betrifft ein Einsatzfahrzeug mit einer Beleuchtungseinrichtung, wie es im Oberbegriff des Patentanspruches 1 beschrieben ist.

Es sind bereits Einsatzfahrzeuge mit Beleuchtungseinrichtungen bekannt. Vielfach wird bei derartigen Einsatzfahrzeugen ein im Inneren des Fahrzeuges angeordneter, teleskopartig ausfahrbarer Mast eingesetzt, an dessen oberen Ende ein oder mehrere Scheinwerfer zur Beleuchtung des Umfeldes des Einsatzfahrzeuges angeordnet sind. Nachteilig ist dabei, daß diese Lichtquellen in einem hohen Abstand über der Einsatzstelle zu verbringen sind, um eine großflächige Ausleuchtung des Arbeitsfeldes zu ermöglichen und andererseits vielfach eine Blendung der eingesetzten Mannschaften bewirken. Es ist zwar bereits auch bekannt, im Übergangsbereich zwischen den Seitenwänden und dem Dach eines derartigen Einsatzfahrzeuges Lichtquellen, insbesondere Leuchtstoffröhren in eigenen Aufnahmeräumen oberhalb der Gerätefächer anzuordnen, meist wird dadurch aber der Stauraum in den Ausrüstungskabinen derartiger Einsatzfahrzeuge nachteilig verringert.

Es ist auch bereits ein Einsatzfahrzeug bekannt - gemäß EP-B1-0 365 937 -, bei welchem im Bereich der Seitenwände Leuchteinrichtungen angeordnet sind. Diese Leuchteinrichtungen sind auf Klappen angeordnet, die sich im oberen seitlichen Bereich der Seitenwände befinden. Diese Klappen können über eigene Verstellantriebe aus einer mit der Seitenwand fluchtenden in eine über diese vorragende Stellung hochgeschwenkt werden, wobei die Leuchteinheiten auf der dem Fahrzeugaufbau zur Aufnahme der Ausrüstung und Löschmittel zugewandten Seite der Klappe angeordnet sind. Dadurch befinden sich die Leuchteinrichtungen bei der eingeklappten, mit der Seitenwand fluchtenden Stellung der Klappen im Inneren des Fahrzeugaufbaus, während sie im ausgeschwenkten Zustand die Arbeitsfläche im Entnahmebereich aus dem Fahrzeugaufbau bzw. vor diesem beleuchten. Der Aufbau dieser Leuchteinrichtungen erfordert eine Vielzahl von Einzelteilen, und die Beschädigung der Leuchteinrichtungen, vor allem bei dem meist hektischen Einsatzgeschehen, durch die über die Seitenwände vorragenden Klappen erfolgt häufig.

Der vorliegenden Erfindung liegt die Aufgabe zugrunde, eine möglichst blendfreie Ausleuchtung des Arbeitsbereiches rund um ein Einsatzfahrzeug zu schaffen, welche auch die Entnahme von Ausrüstungen bzw. Geräten vom Einsatzfahrzeug erleichtert.

Diese Aufgabe der Erfindung wird durch die Merkmale des Patentanspruches 1 gelöst, Vorteilhaft ist dabei, daß durch die Verwendung eines bordwandartigen Begrenzungselementes der meist zur Aufbewahrung von Werkzeugen bzw. Einsatzmitteln benötigte Dachbereich begrenzt werden kann und überdies der Stauraum in der Ausrüstungskabine eines derartigen Einsatzfahrzeuges durch die zusätzliche Anordnung der Umfeldbeleuchtung nicht verringert wird. Der starre Einbau der Lichtquellen erübrigt auch ein zusätzliches Ausfahren eines Lichmastes bzw. ein Ausschwenken von Klappen. Gleichzeitig ist es damit möglich, in beiden Seitenbereichen des Fahrzeuges eine gleichmäßige nahezu schattenfreie Ausleuchtung zu ermöglichen, sodaß eventuell mitgeführte weitere Beleuchtungsmittel, wie ein im Einsatzfahrzeug integrierter Leuchtmast, zur Ausleuchtung der tatsächlichen Einsatzstelle bzw. des Brandobjektes oder dgl. herangezogen werden kann. Der wesentliche Vorteil dieser Ausbildung liegt darin, daß die Unfallgefahr durch Stolpern oder Stürzen bei der Annäherung an das Einsatzfahrzeug und beim Weggehen vom Einsatzfahrzeug in Richtung des Einsatzortes verringert wird und gleichzeitig die Entnahme der Gerätschaften oder Löschmittel aus dem Einsatzfahrzeug erleichtert wird. Ein weiterer Vorteil liegt darin, daß auch eine Ausleuchtung der Dachfläche des Einsatzfahrzeuges für die Entnahme von Einsatzmitteln sowie für ein gefahrloses Begehen derselben erreicht wird.

Von Vorteil ist auch eine Weiterbildung nach Patentanspruch 2, da es durch die Möglichkeit der Verwendung von blendfreien Leuchtstoffröhren als Lichtquelle außerdem möglich ist, eine Blendung der eingesetzten Mannschaften, insbesondere bei der Annäherung an das Einsatzfahrzeug bzw. bei der Entnahme von Gerätschaften oder Löschmitteln auszuschalten

Möglich ist aber auch eine Ausgestaltung gemäß Patentanspruch 3, weil dadurch einerseits die Lichtquelle vor Zutritt von Feuchtigkeit geschützt ist und es andererseits möglich ist, die Lichtstreuung und Leuchtintensität des abgegebenen Lichtes über die Wagenlänge unterschiedlich zu gestalten.

Weiters ist eine Ausbildung nach Patentanspruch 4 vorteilhaft, da damit bei Ausrüstungskabinen, die in selbsttragender oder freitragender Bauweise hergestellt werden, das Begrenzungselement gleichzeitig zur Eckknotenversteifung zwischen dem Dach und der Seitenwand verwendet werden kann.

Vorteilhaft ist aber auch eine Ausführungsvariante nach Patentanspruch 5, da dazu na-. hezu ohne zusätzlichen Aufwand nicht nur der Bereich vor den Seitenwänden des Einsatzfahrzeuges, sondern auch die Dachoberfläche, also auch der Dachbereich, auf welchem üblicherweise weitere Werkzeuge und Ausrüstungsgegenstände gelagert sind, ausgeleuchtet und somit Unfallquellen ausgeschaltet werden können.

Durch die Weiterbildung nach Patentanspruch 6 ist es möglich, die jeweilige Ausleuchtung bzw. den Helligkeitsgrad in den unterschiedlichen Bereichen des Einsatzfahrzeuges einfach zu steuern.

Von Vorteil ist aber auch die Ausbildung nach Patentanspruch 7, da dadurch in das Begrenzungselement die Abdichtung für den Rolladen bzw. die Wasserableitung und die Anordnung der Verbindungselemente im Knotenbereich begünstigt wird. Dazu kommt, daß durch die Anordnung dieser zusätzlichen Elemente eine räumliche Versteifung des Begrenzungselementes ohne Zusatzaufwand, aber mit Zusatznutzen erzielt werden kann.

Weitere vorteilhafte Ausgestaltungen beschreiben die Patentansprüche 8 bis 27, die im Detail in der speziellen Beschreibung der Ausführungsbeispiele näher erläutert sind.

Die Erfindung wird im nachfolgenden anhand der in den Zeichnungen dargestellten Ausführungsbeispiele näher erläutert.

Es zeigen:
- Fig. 1: ein Einsatzfahrzeug mit einer erfindungsgemäßen Beleuchtungseinrichtung in vereinfachter, schaubildlicher Darstellung;
- Fig. 2: einen Teil des Einsatzfahrzeuges im Bereich der Beleuchtungseinrichtung in Stirnansicht, geschnitten, gemäß den Linien II-II in Fig. 1,
- Fig. 3: einen Teil der Beleuchtungseinrichtung in Seitenansicht, gemäß Pfeil III in Fig. 2;
- Fig. 4: das Profil der erfindungsgemäßen Beleuchtungseinrichtung in vergrößerter Darstellung in Stirnansicht, geschnitten;
- Fig. 5: eine Ausführungsvariante des Profils für die erfindungsgemäße Beleuchtungseinrichtung in vergrößerter Darstellung in Stirnansicht, geschnitten.

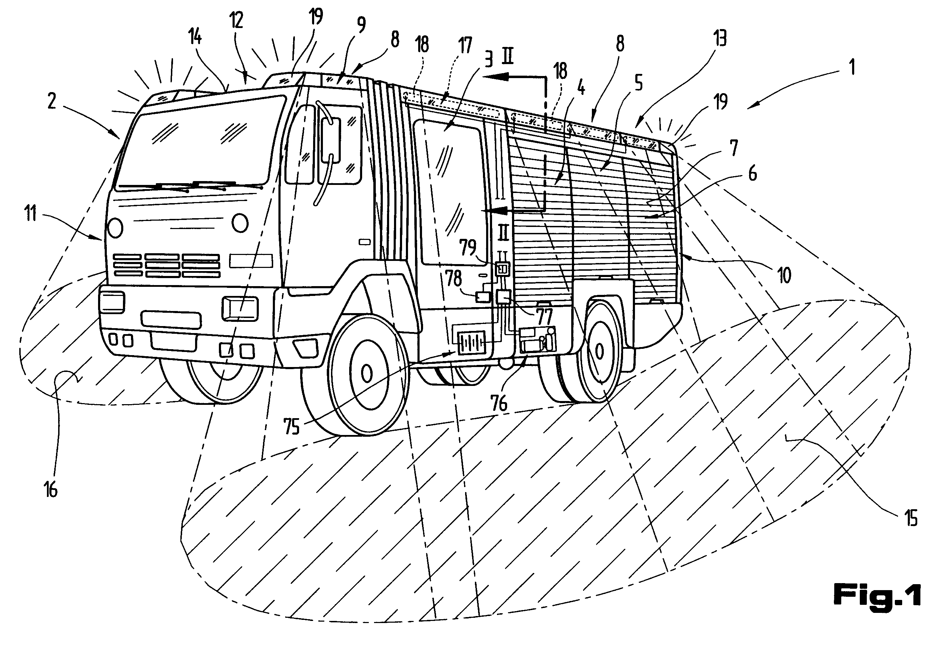

In Fig. 1 ist ein Einsatzfahrzeug 1 gezeigt, beispielsweise ein Feuerwehrfahrzeug, welches im vorliegenden Fall aus einer Fahrerkabine 2, aus einer Mannschaftskabine 3 und Ausrüstungskästen 4 bis 6 gebildet ist. Diese Ausrüstungskästen 4 bis 6 sind beispielsweise über Rolläden 7 zugänglich.

Das Einsatzfahrzeug 1 ist weiters mit einer Beleuchtungseinrichtung 8 ausgestattet. Diese Beleuchtungseinrichtung 8 ist in einem Übergangsbereich 9 zwischen Seitenwänden 10, 11 und einem Dach 12 angeordnet.

Die Beleuchtungseinrichtung 8 ist als bordwandartiges Begrenzungselement 13 ausgebildet und auf einer Dachoberfläche 14 aufgesetzt. Wie weiters in Fig. 1 ersichtlich ist, ist die Beleuchtungseinrichtung 8 so ausgebildet, daß ein Arbeitsbereich 15, 16 - als strichlierte Fläche dargestellt - bei einem Einsatz in der Dunkelheit genügend ausgeleuchtet wird. Durch diese umfangreiche Außenbeleuchtung rund um das Einsatzfahrzeug 1 wird vor allem beim Verlassen der Mannschaftskabine 3 durch die Einsatzkräfte die Unfallgefahr erheblich vermindert.

Dadurch, daß die Beleuchtungseinrichtung 8 sich über einen Großteil der Fahrzeuglänge erstreckt, wird auch eine ausreichende Beleuchtung im Bereich der Ausrüstungskästen 4 bis 6 gewährleistet. Speziell durch die Anordnung der Beleuchtungseinrichtung 8 über einen größeren Bereich sowie die Verwendung von mehreren blendfreien Lichtquellen 17, beispielsweise Leuchtstoffröhren 18, wird vor allem gegenüber einer einzigen Lichtquelle 17, beispielsweise ein auf einem ausgefahrenen Mast befestigter Scheinwerfer, die Schattenbildung erheblich vermindert. Dies ermöglicht vor allem bei Nachteinsätzen ein leichteres und vor allem sicheres Hantieren beim Entladen der Ausrüstungsgegenstände aus den Ausrüstungskästen 4 bis 6 durch die Einsatzkräfte.

Die Anordnung der Leuchtstoffröhren 18 erfolgt parallelverlaufend zur Längsrichtung des Begrenzungselementes 13. Durch die integrierte und starre Anordnung der Beleuchtungseinrichtung 8 im Galerieteil bzw. im Übergangsbereich 9 des Einsatzfahrzeuges 1 ist es möglich, die Beleuchtung bereits unmittelbar vor dem Anhalten des Einsatzfahrzeuges 1 am Einsatzort einzuschalten und somit den Einsatzkräften ein gefahrloses Verlassen des Einsatzfahrzeuges 1 zu ermöglichen, da das Umfeld bereits entsprechend ausgeleuchtet ist.

Dadurch ist auch ein bedeutender Zeitgewinn gewährleistet, da durch den bereits ausgeleuchteten Arbeitsbereich 15, 16 die Einsatzkräfte sofort mit den erforderlichen Tätigkeiten für den Einsatz beginnen können, ohne auf das Ausfahren eines Lichtmastes, welcher aus Sicherheitsgründen erst nach dem Stillstand des Fahrzeuges erfolgen kann, zu warten.

Ebenso wie die Beleuchtungseinrichtung 8 für den Arbeitsbereich 15, 16 ist es auch möglich, rotierende Warnleuchten 19 im Begrenzungselement 13 zu integrieren. Durch diese abgeschlossene Ausbildung der Beleuchtungseinrichtung 8 sowie der Warnleuchten 19 gibt es keine unnötig vorragenden Teile am Einsatzfahrzeug 1, wodurch auch die Fahrsicherheit erhöht wird, vor allem, wenn tiefhängende Äste die Anfahrt zum Einsatzort behindern.

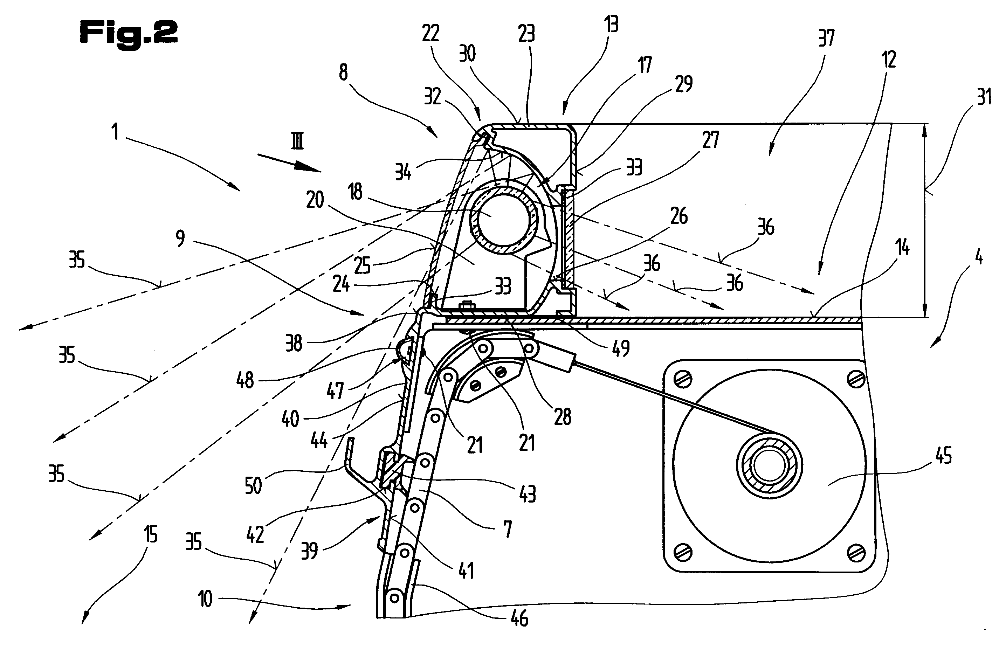

In Fig. 2 ist der Aufbau der Beleuchtungseinrichtung 8 eines Einsatzfahrzeuges 1 im Bereich des Ausrüstungskastens 4 dargestellt. Eine Lichtquelle 17, beispielsweise eine blendfreie Leuchtstoffröhre 18, ist durch einen Leuchtensockel 20 und Befestigungsmittel 21 in einer Verkleidung 22 des Begrenzungselementes 13 befestigt. Das Begrenzungselement 13 ist durch ein Profil 23, beispielsweise ein einstückig gezogenes Aluminiumprofil, gebildet und weist einen etwa L- bzw. C-förmigen Querschnitt auf.

Die Verkleidung 22 umfaßt das Profil 23, welches in Richtung der Seitenwand 10, 11 eine erste Lichtdurchtrittsöffnung 24 aufweist, und mit einer lichtdurchlässigen Verkleidungsplatte 25 verschlossen ist und gegebenenfalls in der davon abgewendeten Richtung eine weitere Lichtdurchtrittsöffnung 26 angeordnet ist, die ebenfalls mit einer Verkleidungsplatte 27 verschlossen ist.

Ein erster Schenkel 28 des Profils 23 liegt auf der Dachoberfläche 14 auf. Ein zweiter Schenkel 29 des Profils 23 ist winkelig zur Dachoberfläche 14 angeordnet und ragt über diese vor. Ein weiterer Schenkel 30 bildet den oberen Abschluß des Begrenzungselementes 13 und ist etwa parallel zum ersten Schenkel 28 um eine Distanz 31 von diesem beabstandet. Zwischen den voneinander abgewendeten, in Richtung der Seitenwand 10 gerichteten Schenkel 28, 30 ist die lichtdurchlässige Verkleidungsplatte 25, beispielsweise aus Plexiglas, angeordnet.

Es ist weiters auch möglich, daß die Verkleidungsplatte 25 stärker gewölbt ist und nur von den beiden Schenkeln 28, 29, die winkelig zueinander angeordnet sind, gehaltert wird.

Im vorliegenden Fall kann die Verkleidungsplatte 25 einerseits, wie im oberen Bereich dargestellt, in das Profil 23 zusammen mit einer Dichtung 32 eingesteckt sein oder, wie im unteren Bereich dargestellt, mittels einer Kleberschichte 33 oder durch Verschrauben mit dem Profil 23 fest verbunden sein.

Das Profil 23 ist so ausgebildet, daß im Bereich des Schenkels 29 in beliebigen Abständen weitere Lichtdurchtrittsöffnungen 26 eingearbeitet werden können. Die Lichtquelle 17 kann auch in diesem Fall durch lichtdurchlässige Verkleidungsplatten 27, die über Kleberschichten 33 am Profil 23 befestigt sind, gegen äußere Einflüsse, insbesondere gegen möglicherweise eindringendes Spritzwasser, geschützt werden.

Die Innenseite des Profils 23 ist als Reflektorfläche 34, beispielsweise als polierter Alu-Reflektor, ausgebildet. Dadurch wird das blendfrei erzeugte Licht der Leuchtstoffröhre 18 direkt oder indirekt über die Reflektorfläche 34 in Richtung des Arbeitsbereiches 15, 16 gerichtet, wie dies vereinfacht durch Lichtstrahlen 35 dargestellt wird.

Ein Teil des Lichtes der Leuchtstoffröhre 18 dringt direkt durch die weitere Lichtdurchtrittsöffnungen 26 auf die Dachoberfläche 14, wie dies vereinfacht durch Lichtstrahlen 36 angedeutet ist, und beleuchtet somit einen Dachbereich 37. Dies ist insofern erforderlich, da üblicherweise weitere Werkzeuge und Ausrüstungsgegenstände auf dem Dach 12 gelagert sind. Durch diese Ausleuchtung des Dachbereiches 37 ist ein gefahrloses Begehen gewährleistet und somit Unfallquellen weitgehendst ausgeschaltet.

Die weiteren Lichtdurchtrittsöffnungen 26 sind gegenüber den ersten Lichtdurchtrittsöffnungen 24 bedeutend kleiner ausgeführt, um nicht die Reflektorfläche 34 allzusehr zu verringern und nicht unnötig viel Licht zur Beleuchtung des Dachbereiches 37 von der Beleuchtung der Arbeitsbereiche 15, 16 abzuzweigen. Durch die unterschiedlichen Querschnittsflächen der Lichtdurchtrittsöffnungen 24, 26 ergibt sich eine einfache Möglichkeit, die jeweilige Ausleuchtung bzw. den Helligkeitsgrad in den unterschiedlichen Bereichen des Einsatzfahrzeuges 1 einfach zu steuern.

An einer vom zweiten Schenkel 29 abgewendeten Stirnseite 38 des ersten Schenkels 28 des Begrenzungselementes 13 ist ein band- bzw. L-förmiges Profil 39 als Schenkel 40 bevorzugt einstückig angeschlossen, welches von der Dachoberfläche 14 in Richtung der Seitenwand 10, 11 vorragt. Dieser Schenkel 40 weist auf einer den Lichtdurchtrittsöffnungen 26 für die Dachoberfläche 14 zugewandten inneren Oberfläche 41 eine Aufnahmenut 42 für ein Dichtungsprofil 43 auf. Dieses Dichtungsprofil 43, welches in Profillängsrichtung durchgehend verläuft, dient insbesondere zur Abdichtung zwischen einem Rolladen 7 und dem bandförmigen Profil 39 und ist auf der von einer äußeren Oberfläche 44 abgewendeten inneren Oberfläche 41 angeordnet.

Der Rolladen 7 wird über eine Lager- und Antriebsvorrichtung 45 in Führungsleisten 46 auf- und abbewegt. Die Führungsleisten 46 dienen gleichzeitig auch zur Positionierung des Rolladens 7 zum Dichtungsprofil 43.

Das bandförmige Profil 39 weist weiters eine in Profillängsrichtung verlaufende Vertiefung 47 auf. Diese Vertiefung 47 dient insbesondere zur Aufnahme von Befestigungsmitteln 21 sowie einer Zierleiste 48, um diese Befestigungsmittel 21 abzudecken. Dadurch ist es in einfacher Weise möglich, das Begrenzungselement 13 im Übergangsbereich 9 der Ausrüstungskästen 4 bis 6 zu befestigen und damit bei Fahrzeugaufbauten in selbsttragender oder freitragender Bauweise eine Eckknotenversteifung zwischen dem Dach 12 und den Seitenwänden 10, 11 zu erreichen.

Zur besseren Abdichtung des Innenraumes der Ausrüstungskästen 4 bis 6 kann zusätzlich zum Dichtungsprofil 43 eine Dichtung 49 im Übergangsbereich 9 zwischen der Dachoberfläche 14 und dem Begrenzungselement 13 bzw. dessen ersten Schenkeln 28 vorgesehen werden.

Weiters besteht die Möglichkeit, auf der Oberfläche 44 des parallel zur Seitenwand 10, 11 verlaufenden Schenkels 40 des L-förmigen Profils 39 eine in Profillängsrichtung verlaufende Regenrinne 50 zu befestigen bzw. an diesen Schenkel 40 einstückig anzuformen.

Durch die Anordnung dieser zusätzlichen Elemente kommt es zu einer räumlichen Versteifung des Begrenzungselementes 13, ohne einen größeren Zusatzaufwand zu betreiben.

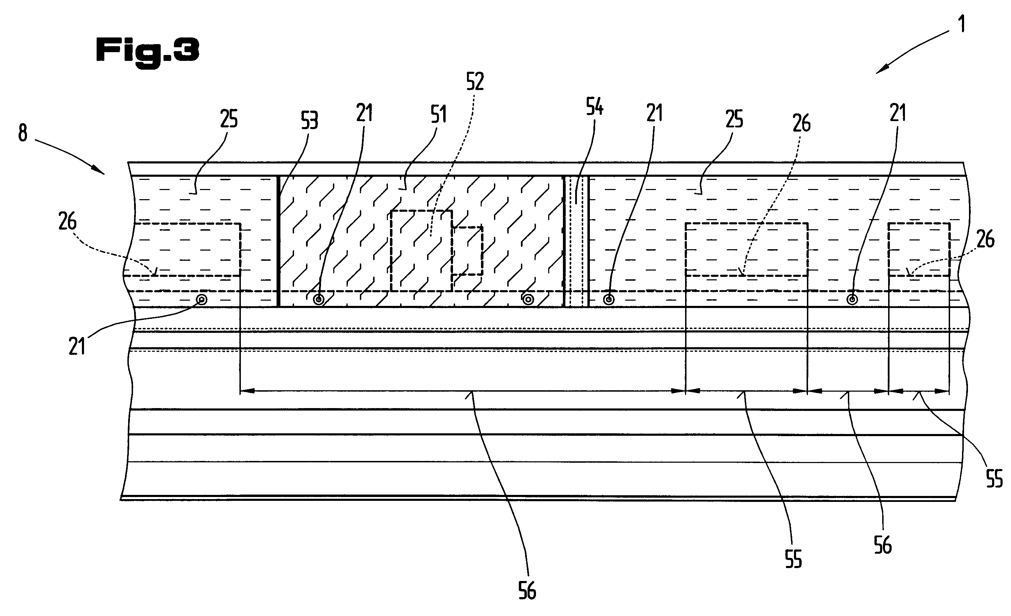

In Fig. 3 ist ein Teil der Beleuchtungseinrichtung 8 eines Einsatzfahrzeuges 1 mit über in Längsrichtung aufgeteilten, unterschiedlichen Verkleidungsplatten 25, 51 gezeigt.

In der vorliegenden Darstellung ist beispielsweise zwischen zwei transparenten, insbesondere auch färbigen Verkleidungsplatten 25, eine opake bzw. undurchsichtige Verkleidungsplatte 51 angeordnet. Es ist selbstverständlich auch möglich, die Verkleidungsplatten 25, 51 in beliebiger Anzahl und auch Größe untereinander zu kombinieren.

Dadurch ergibt sich die Möglichkeit, Teile der Lichtquelle 17, wie z.B. Steuergeräte 52 oder diverse Schaltgeräte, durch matte, undurchsichtige Verkleidungsplatten 51 abzudecken.

Besonders wichtig ist, eine flüssigkeitsdichte Verbindung zwischen den einzelnen Verkleidungsplatten 25, 51 zu erreichen, um nicht nur die Lichtquellen 17, sondern auch die dazugehörenden Steuergeräte 52 vor Spritz- und auch Regenwasser zu schützen.

Diese flüssigkeitsdichte Verbindung der einzelnen Verkleidungsplatten 25, 51 untereinander kann auf einfache Weise durch eine Kleberschichte 53 erzielt werden. Um jedoch auch die Zugänglichkeit, beispielsweise zum Wechseln der Leuchtstoffröhren 18 zu gewährleisten, kann die flüssigkeitsdichte Verbindung durch ein aufgestecktes Dichtungsband 54 erfolgen.

Eine exakte Fixierung der Verkleidungsplatten 25, 51 kann zusätzlich durch Befestigungsmittel 21 erzielt werden.

Weiters ist in Fig. 3 ersichtlich, daß die Lichtdurchtrittsöffnungen 26 beliebige Längen 55 aufweisen können und in unterschiedlichen Abständen 56 zueinander angeordnet sein können. Durch diese frei wählbare Anordnung der Lichtdurchtrittsöffnungen 26 ist es möglich, wichtige Dachbereiche durch eine gezielte Beleuchtung besonders abzusichern.

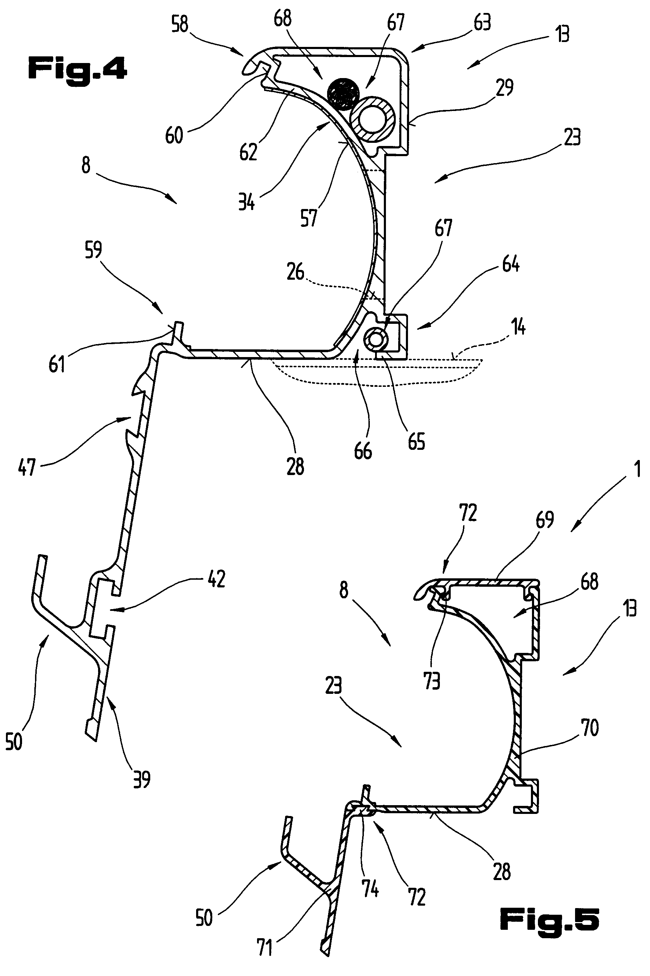

In Fig. 4 ist das Profil 23 des Begrenzungselementes 13 der erfindungsgemäßen Beleuchtungseinrichtung 8 in Stirnansicht, geschnitten und in vergrößertem Maßstab dargestellt. Dabei ist vor allem ersichtlich, daß die Reflektorfläche 34 auf der Innenseite des Profils 23 mit einer lichtreflektierenden Beschichtung 57, z.B. einer Lackschichte, einer Folie oder dgl. versehen werden kann. Es ist aber auch ohne weiteres möglich und vor allem auch ausreichend, die Reflektorfläche 34 aufzupolieren und somit auch genügend Licht zur Ausleuchtung der Arbeitsbereiche 15, 16 zu erhalten.

Das Profil 23 wird im Bereich des zweiten Schenkels 29 ohne weitere Lichtdurchtrittsöffnungen 26 hergestellt. Dadurch kann die Anordnung und Größe der weiteren Lichtdurchtrittsöffnungen 26 beliebig groß gewählt werden und somit in einfacher Weise auf die unterschiedlichsten Arten von Einsatzfahrzeugen 1 abgestimmt bzw. angepaßt werden.

Das Profil 23 weist in voneinander abgewendeten Endbereichen 58, 59 der beiden Schenkel 28, 29 nutförmige Vertiefungen 60 bzw. Anschlagleisten 61 zur Aufnahme bzw. Halterung und gleichzeitiger Führung der Verkleidungsplatten 25, 51 auf. Dadurch ist eine exakte Fixierung der Verkleidungsplatten 25, 51 möglich, sowie eine einfache Befestigung sichergestellt.

Der zweite Schenkel 29 des Profils 23 weist einen C-förmigen Querschnitt auf, wobei ein Teilbereich des Querschnitts dieses Schenkels 29 eine Begrenzungswand 62 eines hohlprofilförmigen Profilteils 63 bildet. Weiters ist am zweiten Schenkel 29 ein Stützsteg 64 angeformt, welcher einen in Richtung des ersten Schenkels 28 geöffneten U-förmigen Querschnitt aufweist. Der Stützsteg 64 besitzt einen Schenkel 65, der parallel, insbesondere fluchtend, zum ersten Schenkel 28 des Profils 23 angeordnet ist. Dieser Schenkel 65 des Stützsteges 64 dient einerseits zur Abstützung des Profils 23 auf der Dachoberfläche 14 - in strichlierten Linien angedeutet - sowie andererseits in Verbindung mit der Dachoberfläche 14 zur Ausbildung eines Kabelkanales 66. Der Kabelkanal 66 dient vor allem zur Aufnahme von Versorgungs- bzw. Steuerleitungen 67 für Energie- und Druckmittel. Ebenso ist es auch möglich, den hohlprofilförmigen Profilteil 63 als Kabelkanal 68 auszubilden und weitere Versorgungs- bzw. Steuerleitungen 67 darin unterzubringen. Diese Anordnung der Kabelkanäle 66, 68 im Profil 23 bietet eine äußerst platzsparende Lösung zur Unterbringung der Versorgungs- bzw. Steuerleitungen 67.

Die verschiedenen Möglichkeiten zur Anbringung von Vertiefungen 47, einer Aufnahmenut 42 sowie einer Regenrinne 50 im Bereich des bandförmigen Profils 39 wurde bereits in Fig. 3 näher erläutert.

In Fig. 5 ist eine Ausführungsvariante des Profils 23 für die Beleuchtungseinrichtung 8 des Begrenzungselementes 13 eines Einsatzfahrzeuges 1 dargestellt.

Das Begrenzungselement 13 ist in diesem Fall aus Kunststoff, insbesondere aus glasfaserverstärktem Kunststoff oder einem Duroplast oder aus einem Thermoplast gebildet und besteht aus mehreren Profilteilen 69 bis 71. Durch diese Anordnung mehrerer einzelner über Kupplungsvorrichtungen 72, z.B. Schnappverbindungen 73, Führungsleisten 74 oder dgl., ist es möglich, ein Begrenzungselement 13 für die unterschiedlichsten Anwendungen auf einfache Weise und vor allem kostengünstig herzustellen. Beispielsweise kann ein Profilteil 71, welcher als Regenrinne 50 ausgebildet ist, direkt über die Führungsleiste 74 am ersten Schenkel 28 des Profils 23 befestigt werden. Des weiteren kann ein Kabelkanal 68 mit einem Profilteil 69, welcher mit einer als Schnappverbindung 73 ausgebildeten Kupplungsvorrichtung 72 versehen ist, abgedeckt werden.

Wie weiters in Fig. 1 ersichtlich, besteht die Möglichkeit, die Beleuchtungseinrichtung 8 wahlweise mit Niederspannung, z.B. 12 bzw. 24 Volt oder mit normaler Netzspannung, beispielsweise zwischen 110 und 250 Volt Wechselspannung zu betreiben. In vereinfachter Darstellung ist gezeigt, daß die Niederspannung bzw. Gleichspannung von einer Batterie 75 und die Normalspannung bzw. Wechselspannung von einem Stromaggregat 76 geliefert wird. Mit Hilfe einer Schaltvorrichtung 77 kann wahlweise zwischen der Batterie 75 und dem Stromaggregat 76 umgeschaltet werden.

Ebenso besteht die Möglichkeit einen zusätzlichen Energiespeicher 78 im Einsatzfahrzeug 1 anzuordnen, um zumindest für einen bestimmten Zeitraum die Beleuchtungseinrichtung 8 als Notbeleuchtung betreiben zu können.

Um die Beleuchtungseinrichtung 8 über einen längeren Zeitraum energiesparend betreiben zu können, besteht weiters die Möglichkeit, die Lichtquellen 17 bzw. die einzelnen Leuchtstoffröhren 18 nach freier Wahl gruppenweise miteinander zu verbinden. Somit kann beispielsweise während eines längeren Zeitraumes, in dem keine Entnahme von Ausrüstungsgegenstände aus den Ausrüstungskästen 4 bis 6 erfolgt, durch eine weitere Schaltvorrichtung 79, beispielsweise jede zweite Leuchtstoffröhre 18, abgeschaltet werden.

Obendrein sind auch Bewegungsmelder einsetzbar, um bei Annäherung der Einsatzkräfte an das Einsatzfahrzeug 1 die reduzierte Beleuchtung vollautomatisch auf Vollbeleuchtung umzuschalten.

Durch diese Zusatzeinrichtungen kann auf einfache Weise Energie gespart werden, ohne dabei die Sicherheit der Einsatzkräfte zu vernachlässigen.

Abschließend wird darauf hingewiesen, daß zum besseren Verständnis der Erfindung einzelne Teile und Bauelemente unproportional und unmaßstäblich verzerrt dargestellt werden.

### Bezugszeichenaufstellung

- 1: Einsatzfahrzeug
- 2: Fahrerkabine
- 3: Mannschaftskabine
- 4: Ausrüstungskasten
- 5: Ausrüstungskasten
- 6: Ausrüstungskasten
- 7: Rolladen
- 8: Beleuchtungseinrichtung
- 9: Übergangsbereich
- 10: Seitenwand
- 11: Seitenwand
- 12: Dach
- 13: Begrenzungselement
- 14: Dachoberfläche
- 15: Arbeitsbereich
- 16: Arbeitsbereich
- 17: Lichtquelle
- 18: Leuchtstoffröhre
- 19: Warnleuchte
- 20: Leuchtensockel
- 21: Befestigungsmittel
- 22: Verkleidung
- 23: Profil
- 24: Erste Lichtdurchtrittsöffnung
- 25: Verkleidungsplatte
- 26: Weitere Lichtdurchtrittsöffnung
- 27: Verkleidungsplatte
- 28: Erster Schenkel
- 29: Zweiter Schenkel
- 30: Schenkel
- 31: Distanz
- 32: Dichtung
- 33: Kleberschichte
- 34: Reflektorfläche
- 35: Lichtstrahl
- 36: Lichtstrahl
- 37: Dachbereich
- 38: Stirnseite
- 39: Profil
- 40: Schenkel
- 41: Oberfläche
- 42: Aufnahmenut
- 43: Dichtungsprofil
- 44: Oberfläche
- 45: Lager- und Antriebsvorrichtung
- 46: Führungsleiste
- 47: Vertiefung
- 48: Zierleiste
- 49: Dichtung
- 50: Regenrinne
- 51: Verkleidungsplatte
- 52: Steuergerät
- 53: Kleberschichte
- 54: Dichtungsband
- 55: Länge
- 56: Abstand
- 57: Beschichtung
- 58: Endbereich
- 59: Endbereich
- 60: Vertiefung
- 61: Anschlagleiste
- 62: Begrenzungswand
- 63: Profilteil
- 64: Stützsteg
- 65: Schenkel
- 66: Kabelkanal
- 67: Versorgungs- bzw. Steuerleitung
- 68: Kabelkanal
- 69: Profilteil
- 70: Profilteil
- 71: Profilteil
- 72: Kupplungsvorrichtung
- 73: Schnappverbindung
- 74: Führungsleiste
- 75: Batterie
- 76: Stromaggregat
- 77: Schaltvorrichtung
- 78: Energiespeicher
- 79: Schaltvorrichtung

## Patentansprüche

1. Einsatzfahrzeug (1) mit einer Beleuchtungseinrichtung (8) für einen sich von einer Seitenwand (10, 11) und/oder einem Dach (12), zumindest in Richtung des sich vom Einsatzfahrzeug (1) wegerstreckenden Arbeitsbereichs (15, 16), wobei die Beleuchtungseinrichtung (8) im Übergangsbereich zwischen der Seitenwand (10, 11) und dem Dach (12) des Einsatzfahrzeuges (1) angeordnet ist, wobei im Übergangsbereich zumindest zwischen der Seitenwand (10, 11) und dem Dach (12) des Einsatzfahrzeuges (1) ein auf das Dach (12) aufgesetztes, dieses in etwa senkrechter Richtung überragendes bordwandartiges Begrenzungselement (13) angeordnet ist, in dem eine Lichtquelle (17) in einer Verkleidung (22) angeordnet ist, die in Richtung der Seitenwand (11, 12) des Einsatzfahrzeuges (1) eine erste Lichtdurchtrittsöffnung (24) aufweist, dadurch gekennzeichnet, daß in von der Seitenwand (10, 11) abgewendeter Richtung du Verkleidung (22) eine weitere Lichtdurchtrittsöffnung (26) angeordnet ist, wobei das bordwandartige Begrenzungselement (13) durch ein einstückig gezogenes Aluminiumprofil gebildet ist.

2. Einsatzfahrzeug nach Anspruch 1, dadurch gekennzeichnet, daß die Lichtquelle (17) durch eine Leuchtstoffröhre (18) gebildet ist.

3. Einsatzfahrzeug nach einem oder mehreren der Ansprüche 1 bis 2, dadurch gekennzeichnet, daß die Lichtdurchtrittsöffnungen (24, 26) durch eine Lichtdurchlässige Verkleidungsplatte (25, 27) verschlossen sind.

4. Einsatzfahrzeug nach einem oder mehreren der Ansprüche 1 bis 3, dadurch gekennzeichnet, daß das Begrenzungselement (8) einen etwa L- bzw. C-förmigen Querschnitt aufweist, wobei ein erster Schenkel (28) auf der Dachoberfläche (14) aufliegt und ein zweiter Schenkel (29) winkelig zur Dachoberfläche (14) über diese vorragt und die Verkleidung (22) durch die vorragenden beiden Schenkel (28, 29) und eine zwischen diesen angeordnete lichtdurchlässige Verkleidungsplatte (25) gebildet ist.

5. Einsatzfahrzeug nach einem oder mehreren der Ansprüche 1 bis 4, dadurch gekennzeichnet, daß weitere die Lichtdurchtrittsöffnung (26) in dem von der Verkleidungsplatte (25) abgewendeten Teil des Profils (23) bzw. dem zweiten Schenkel (29) angeordnet ist.

6. Einsatzfahrzeug nach einem oder mehreren der Ansprüche 1 bis 5, dadurch gekennzeichnet, daß die Querschnittsfläche der Lichtdurchtrittsöffnungen (24, 26) auf der der Seitenwand (10, 11) zugewandten Seite größer ist als auf der der Dachoberfläche (14) zugewandten Seite.

7. Einsatzfahrzeug nach einem oder mehreren der Ansprüche 1 bis 6, dadurch gekennzeichnet, daß an einer vom zweiten Schenkel (29) abgewendeten Stirnseite (38) des ersten Schenkels (28) des Begrenzungselernentes (13) ein band- bzw. L-förmiges Profil (39), bevorzugt einstückig anschließt, welches von der Dachoberfläche (14) in Richtung der Seitenwand (10, 11) vorragt.

8. Einsatzfahrzeug nach einem oder mehreren der Ansprüche 1 bis 7, dadurch gekennzeichnet, daß in den parallel zur Seitenwand (10, 11) verlaufenden bandförmigen Profil (39) bzw. dem Schenkel (40) des L-förmigen Profils (39) auf der den weiteren Lichtdurchtrittsöffnungen (26) für die Dachoberfläche (14) zugewandten inneren Oberfläche (41) eine Aufnahmenut (42) für ein Dichtungsprofil (43), insbesondere für einen Rolladen (7), angeordnet ist welche in Profillängsrichtung durchgehend verläuft.

9. Einsatzfahrzeug nach einem oder mehreren der Ansprüche 1 bis 8, dadurch gekennzeichnet, daß auf der von der Aufnahmenut (42) abgewendeten Oberfläche (44) des bandförmigen Profils (39) bzw. des parallel zur Seitenwand (10, 11) verlaufenden Schenkels (40) des L-förmigen Profils (39) eine in Profillängsrichtung verlaufende Vertiefung (47), insbesondere zur Aufnahme von Befestigungsmittel (21) und/oder einer Zierleiste (48) angeordnet ist.

10. Einsatzfahrzeug nach einem oder mehreren der Ansprüche 1 bis 9, dadurch gekennzeichnet, daß auf der von der Aufnahmenut (42) abgewendeten Oberfläche (44) des bandförmigen Profils (39) bzw. des parallel zur Seitenwand (10, 11) verlaufenden Schenke's (40) des L-förmigen Profils (39) eine in Profillängsrichtung verlaufende Regenrinne (50) befestigt oder angeformt ist.

11. Einsatzfahrzeug nach einem oder mehreren der Ansprüche 1 bis 10, dadurch gekennzeichnet, daß der zweit Schenkel (29) einen C-förmigen Querschnitt aufweist und ein Teilbereich des Querschnitts dieses Schenkels (29) eine Begrenzungswand (62) eines hohlprofilförmigen Profilteils (63) bildet.

12. Einsatzfahrzeug nach einem oder mehreren der Ansprüche 1 bis 11, dadurch gekennzeichnet, daß auf der vom ersten Schenkel (28) abgewendeten Seite des zweiten Schenkels (29) ein über diesen vortagender Stützsteg (64) angeformt ist.

13. Einsatzfahrzeug nach einem oder mehreren der Ansprüche 1 bis 12, dadurch gekennzeichnet, daß der Stützsteg (64) einen in Richtung des ersten Schenkels (28) geöffneten U-förmigen Querschnitt aufweist.

14. Einsatzfahrzeug nach einem oder mehreren der Ansprüche 1 bis 13, dadurch gekennzeichnet, daß einer der Schenkel des Stützsteges (64) am zweiten Schenkel (29) befestigt oder angeformt ist und der weitere dazu parallel laufende Schenkel (65) parallel, insbesondere fluchtend zum ersten Schenkel (28) angeordnet ist.

15. Einsatzfahrzeug nach einem oder mehreren der Ansprüche 1 bis 14 dadurch gekennzeichnet, daß im hohlprofilförmigen Profilteil (63) und/oder in dem vom Stützsteg (64) und dem zweiten Schenkel (29) Versorgungs- bzw. Steuerleitungen (67) für Energie- und/oder Druckmittel angeordnet sind.

16. Einsatzfahrzeug nach einem oder mehreren der Ansprüche 1 bis 15, dadurch gekennzeichnet, daß auf der der Dachoberfläche (14) zugewandten Seite des Begrenzungselementes (13) mehrere, bevorzugt in vorbestimmbaren Abständen voneinander angeordnete weitere Lichtdurchtrittsöffnungen (26) angeordnet sind.

17. Einsatzfahrzeug nach einem oder mehreren der Ansprüche 1 bis 16, dadurch gekennzeichnet, daß die der Lichtquelle (17) zugewandte Oberfläche, bevorzugt des zweiten Schenkels (29), mit einer lichtreflektierenden Beschichtung (57), z.B. einer Lackschichte, einer Folie oder dgl., oder mit einer reflektierenden Oberfläche, z.B. poliert, versehen ist.

18. Einsatzfahrzeug nach einem oder mehreren der Ansprüche 1 bis 17, dadurch gekennzeichnet, daß in den voneinander abgewendeten Endbereichen (58, 59) der beiden Schenkel (28, 29) des Begrenzungselementes (13) nutförmige Vertiefungen (60) und/oder Anschlagleisten (61) zur Aufnahme bzw. Halterung und/oder Führung der Verkleidungsplatten (25, 51) angeordnet sind.

19. Einsatzfahrzeug nach einem oder mehreren der Ansprache 1 bis 18, dadurch gekennzeichnet, daß die Lichtquelle (17), insbesondere die Leuchtstoffröhren (18) über Leuchtensockel (20) am Begrenzungselement (13) abgestützt sind.

20. Einsatzfahrzeug nach einem oder mehreren der Ansprüche 1 bis 19, dadurch gekennzeichnet, daß die Leuchtstoffröhren (18) parallel zur Längsrichtung des Begrenzungselementes (13) verlaufend angeordnet sind.

21. Einsatzfahrzeug nach einem oder mehreren der Ansprüche 1 bis 20, dadurch gekennzeichnet, daß die Lichtquellen (17) mit unterschiedlichen Stromquellen parallel oder aufeinanderfolgend verbunden sind.

22. Einsatzfahrzeug nach einem oder mehreren der Ansprüche 1 bis 21, dadurch gekennzeichnet, daß die Lichtquellen (17) mit diesen zugeordneten Energiespeichern verbunden sind.

23. Einsatzfahrzeug nach einem oder mehreren der Ansprüche 1 bis 22, dadurch gekennzeichnet, daß in Längsrichtung des Begrenzungselementes (13) Lichtquellen (17) aufeinanderfolgend angeordnet sind, die mit unterschiedlichen Energiequellen verbunden sind.

24. Einsatzfahrzeug nach einem oder mehreren der Ansprüche 1 bis 23, dadurch gekennzeichnet, daß zwischen transparenten durchscheinenden, insbesondere farbigen Verkleidungsplatten (25, 27), opake bzw. undurchsichtige Verkleidungsplatten (51) bzw. Plattenteile angeordnet sind.

25. Einsatzfahrzeug nach einem oder mehreren der Ansprüche 1 bis 24, dadurch gekennzeichnet, daß die einzelnen Verkleidungsplatten (25, 51) bzw. Verkleidungsplattenteile untereinander flüssigkeitsdicht verbunden sind.

26. Einsatzfahrzeug nach einem oder mehreren der Ansprüche 1 bis 25, dadurch gekennzeichnet, daß das Begrenzungselement (13) aus Kunststoff, insbesondere aus glasfaserverstärktem Kunststoff oder einem Duroplast oder aus einem Thermoplast gebildet ist.

27. Einsatzfahrzeug nach einem oder mehreren der Ansprüche 1 bis 26, dadurch gekennzeichnet, daß das Begrenzungselement (13) aus mehreren einzelnen über Kupplungsvorrichtungen (72), z.B. Schnappverbindungen (73), Führungsleisten (74) oder dgl. verbindbare Profilteile (69 bis 71) zusammengesetzt ist.

## Claims

1. Operations vehicle (1) with a lighting device (8) for a working area (15, 16) extending away from the operations vehicle (1) at least in the direction from a side panel (10, 11) and/or a roof (12), wherein the lighting device (8) is arranged in the transition region between the side panel (10, 11) and the roof (12) of the operations vehicle (1), wherein in the transition region at least between the side panel (10, 11) and the roof (12) of the operations vehicle (1) is arranged a dropside-like boundary element (13) which is placed on the roof (12) and projects beyond it in a more or less perpendicular direction and in which is arranged a light source (17) in a lining (22) which in the direction of the side panel (11, 12) of the operations vehicle (1) comprises a first opening (24) for passage of light, characterised in that in the direction of the lining (22) facing away from the side panel (10, 11) is arranged a further opening (26) for passage of light, wherein the dropside-like boundary element (13) is formed by an aluminium profile drawn in one piece.

2. Operations vehicle according to claim 1, characterised in that the light source (17) is formed by a fluorescent tube (18).

3. Operations vehicle according to one or more of claims 1 to 2, characterised in that the openings (24, 26) for passage of light are sealed by a light-transmitting lining panel (25, 27).

4. Operations vehicle according to one or more of claims 1 to 3, characterised in that the boundary element (8) has a more or less L-shaped or C-shaped cross-section, wherein a first arm (28) rests on the roof surface (14) and a second arm (29) projects at an angle to the roof surface (14) beyond the latter and the lining (22) is formed by the two projecting arms (28, 29) and a light-transmitting lining panel (25) arranged between the latter.

5. Operations vehicle according to one or more of claims 1 to 4, characterised in that the further opening (26) for passage of light is arranged in the portion of the profile (23) facing away from the lining panel (25) or in the second arm (29).

6. Operations vehicle according to one or more of claims 1 to 5, characterised in that the cross-sectional area of the openings (24, 26) for passage of light is larger on the side facing towards the side panel (10, 11) than on the side facing towards the roof surface (14).

7. Operations vehicle according to one or more of claims 1 to 6, characterised in that connected, preferably integrally, to an end face (38) of the first arm (28) of the boundary element (13) facing away from the second arm (29), is a strip-like or L-shaped profile (39) which projects from the roof surface (14) in the direction of the side panel (10, 11).

8. Operations vehicle according to one or more of claims 1 to 7, characterised in that in the strip-like profile (39) running parallel to the side panel (10, 11) or in the arm (40) of the L-shaped profile (39), on the inner surface (41) facing towards the further openings (26) for passage of light for the roof surface (14), is arranged a holding groove (42) for a sealing profile (43), in particular for a roller shutter (7), which extends continuously in the longitudinal direction of the profile.

9. Operations vehicle according to one or more of claims 1 to 8, characterised in that on the surface (44) of the strip-like profile (39) facing away from the holding groove (42), or of the arm (40) of the L-shaped profile (39) extending parallel to the side panel (10, 11), is arranged a recess (47) extending in the longitudinal direction of the profile, in particular for receiving fixing means (21) and/or a trim strip (48).

10. Operations vehicle according to one or more of claims 1 to 9, characterised in that on the surface (44) of the strip-like profile (39) facing away from the holding groove (42), or of the arm (40) of the L-shaped profile (39) extending parallel to the side panel (10, 11), is fixed or formed integrally a gutter (50) extending in the longitudinal direction of the profile.

11. Operations vehicle according to one or more of claims 1 to 10, characterised in that the second arm (29) has a C-shaped cross-section, and part of the cross-section of this arm (29) forms a boundary wall (62) of a hollow profile-shaped profile portion (63).

12. Operations vehicle according to one or more of claims 1 to 11, characterised in that on the side of the second arm (29) facing away from the first arm (28) is integrally formed a support web (64) projecting beyond the latter.

13. Operations vehicle according to one or more of claims 1 to 12, characterised in that the support web (64) has a U-shaped cross-section opening in the direction of the first arm (28).

14. Operations vehicle according to one or more of claims 1 to 13, characterised in that one of the arms of the support web (64) is fixed to or formed integrally with the second arm (29), and the other arm (65) extending parallel thereto is arranged parallel to, in particular aligned with, the first arm (28).

15. Operations vehicle according to one or more of claims 1 to 14, characterised in that in the hollow profile-shaped profile portion (63) and/or in that of the support web (64) and the second arm (29) are arranged supply or control lines (67) for energy and/or pressure media.

16. Operations vehicle according to one or more of claims 1 to 15, characterised in that on the side of the boundary element (13) facing towards the roof surface (14) are arranged several further openings (26) for passage of light, preferably arranged at present distances from each other.

17. Operations vehicle according to one or more of claims 1 to 16, characterised in that the surface, preferably of the second arm (29), facing towards the light source (17), is provided with a light-reflecting coating (57), e.g. a coat of paint, a film or the like, or with a reflective surface, e.g. polished.

18. Operations vehicle according to one or more of claims 1 to 17, characterised in that in the end regions (58, 59) of the two arms (28, 29) of the boundary element (13) facing away from each other are arranged groove-like recesses (60) and/or stop strips (61) for receiving or supporting and/or guiding the lining panels (25, 51).

19. Operations vehicle according to one or more of claims 1 to 18, characterised in that the light source (17), in particular the fluorescent tubes (18), are supported on the boundary element (13) by lamp bases (20).

20. Operations vehicle according to one or more of claims 1 to 19, characterised in that the fluorescent tubes (18) are arranged to extend parallel to the longitudinal direction of the boundary element (13).

21. Operations vehicle according to one or more of claims 1 to 20, characterised in that the light sources (17) are connected to different power sources in parallel or successively.

22. Operations vehicle according to one or more of claims 1 to 21, characterised in that the light sources (17) are connected to energy storing devices associated therewith.

23. Operations vehicle according to one or more of claims 1 to 22, characterised in that in the longitudinal direction of the boundary element (13) are successively arranged light sources (17) which are connected to different energy sources.

24. Operations vehicle according to one or more of claims 1 to 23, characterised in that between transparent, in particular coloured lining panels (25, 27) are arranged opaque lining panels (51) or panel portions.

25. Operations vehicle according to one or more of claims 1 to 24, characterised in that the individual lining panels (25, 51) or lining panel portions are connected to each other liquid-tightly.

26. Operations vehicle according to one or more of claims 1 to 25, characterised in that the boundary element (13) is formed from plastic, in particular glass fibre-reinforced plastic or a thermosetting plastic or a thermoplastic material.

27. Operations vehicle according to one or more of claims 1 to 26, characterised in that the boundary element (13) is composed of several individual profile portions (69 to 71) which can be connected by coupling devices (72), e.g. snap connections (73), guide strips (74) or the like.

## Revendications

1. Véhicule d'intervention (1) avec un dispositif d'éclairage (8) pour une zone de travail (15, 16) s'étendant d'une paroi latérale (10, 11) et/ou d'un toit (12), au moins dans la direction au loin du véhicule d'intervention (1), le dispositif d'éclairage (8) étant disposé dans la zone de transition entre la paroi latérale (10, 11) et le toit (12) du véhicule d'intervention (1), où il est disposé dans la zone de transition au moins entre la paroi latérale (10, 11) et le toit (12) du véhicule d'intervention (1) un élément de délimitation (13) d'un type de bordage placé sur le toit (12), faisant salle sur celui-ci à peu près dans la direction verticale, dans lequel est disposée une source lumineuse (17) dans un cache (22) qui présente en direction de la paroi latérale (11, 12) du véhicule d'intervention (1) une première ouverture de passage de lumière (24), caractérisé en ce qu'il est disposé dans la direction éloignée de la paroi latérale (10, 11) du cache (22) une ouverture de passage de lumière additionnelle (26), l'élément de délimitation du type de bordage (13) étant formé par un profilé en aluminium obtenu par filage en une pièce.

2. Véhicule d'intervention selon la revendication 1, caractérisé en ce que la source de lumière (17) est formée par un tube fluorescent (18).

3. Véhicule d'intervention selon l'une ou plusieurs des revendications 1 à 2, caractérisé en ce que les ouvertures de passage de lumière (24, 26) sont fermées par une plaque de revêtement (25, 27) laissant passer la lumière.

4. Véhicule d'intervention selon l'une ou plusieurs des revendications 1 à 3, caractérisé en ce que l'élément de délimitation (8) présente une section transversale à peu près en forme de L respectivement de C, une première branche (28) reposant sur la surface de toit (14) et une deuxième branche (29) faisant saillie angulairement à la surface de toit (14) sur celle-ci, et le cache (22) est formé par les deux branches saillantes (28, 29) et une plaque de revêtement (25) laissant passer la lumière, disposée entre celles-ci.

5. Véhicule d'intervention selon l'une ou plusieurs des revendications 1 à 4, caractérisé en ce que l'ouverture de passage de lumière additionnelle (26) est disposée dans la partie du profilé (23) éloignée de la plaque de revêtement (25) respectivement dans la deuxième branche (29).

6. Véhicule d'intervention selon l'une ou plusieurs des revendications 1 à 5, caractérisé en ce que la surface en section transversale des ouvertures de passage de lumière (24, 26) est plus grande sur le côté orienté vers la paroi latérale (10, 11) que sur le côté orienté vers la surface de toit (14).

7. Véhicule d'intervention selon l'une ou plusieurs des revendications 1 à 6, caractérisé en ce que fait suite à un côté frontal (38), éloigné de la deuxième branche (29), de la première branche (28) de l'élément de délimitation (13) un profilé en forme de bande respectivement de L (39), de préférence en une pièce, qui fait saillie de la surface de toit (14) en direction de la paroi latérale (10, 11).

8. Véhicule d'intervention selon l'une ou plusieurs des revendications 1 à 7, caractérisé en ce qu'il est disposé dans le profilé en forme de bande (39) s'étendant parallèlement à la paroi latérale (10, 11) respectivement dans la branche (40) du profilé en forme de L (39) sur la surface intérieure (41) orientée vers les ouvertures de passage de lumière additionnelles (26) pour la surface de toit (14) une rainure de réception (42) pour un joint d'étanchéité profilé (43), notamment pour un volet roulant (7) qui s'étend d'une manière continue dans la direction longitudinale du profilé.

9. Véhicule d'intervention selon l'une ou plusieurs des revendications 1 à 8, caractérisé en ce qu'il est disposé sur la surface (44) éloignée de la rainure de réception (42) du profilé en forme de bande (39) respectivement de la branche (40) s'étendant parallèlement à la paroi latérale (10, 11) du profilé en forme de L (39) un creux (47) s'étendant dans la direction longitudinale du profilé, notamment pour la réception de moyens de fixation (21) et/ou d'une baguette ornementée (48).

10. Véhicule d'intervention selon l'une ou plusieurs des revendications 1 à 9, caractérisé en ce qu'il est fixé ou rapporté par formage sur la surface (44) éloignée de la rainure de réception (42) du profilé en forme de bande (39) respectivement de la branche (40) s'étendant parallèlement à la paroi latérale (10, 11) du profilé en forme de L (39) une gouttière (50) s'étendant dans la direction longitudinale du profilé.

11. Véhicule d'intervention selon l'une ou plusieurs des revendications 1 à 10, caractérisé en ce que la deuxième branche (29) présente une section transversale en forme de C et qu'une zone partielle de la section transversale de cette branche (29) forme une paroi de délimitation (62) d'une partie de profilé (63) en forme de profilé creux.

12. Véhicule d'intervention selon l'une ou plusieurs des revendications 1 à 11, caractérisé en ce qu'il est rapporté par formage sur le côté éloigné de la première branche (28) de la deuxième branche (29) une nervure d'appui (64) faisant salle sur celle-ci.

13. Véhicule d'intervention selon l'une ou plusieurs des revendications 1 à 12, caractérisé en ce que la nervure d'appui (64) présente une section transversale en forme de U ouverte en direction de la première branche (28).

14. Véhicule d'intervention selon l'une ou plusieurs des revendications 1 à 13, caractérisé en ce que l'une des branches de la nervure d'appui (64) est fixée ou rapportée par formage à la deuxième branche (29) et que l'autre branche (65) s'étendant parallèlement à celle-ci est disposée parallèlement, notamment selon un alignement avec la première branche (28).

15. Véhicule d'intervention selon l'une ou plusieurs des revendications 1 à 14, caractérisé en ce que sont disposés dans la partie de profilé (63) en forme de profilé creux et/ou dans la nervure d'appui (64) et la deuxième branche (29) des lignes d'alimentation respectivement de commande (67) pour des moyens d'énergie et/ou de pression.

16. Véhicule d'intervention selon l'une ou plusieurs des revendications 1 à 15, caractérisé en ce que sont disposés sur le côté orienté vers la surface de toit (14) de l'élément de délimitation (13) plusieurs ouvertures de passage de lumière additionnelles (26) disposées de préférence à des écarts prédéterminables les unes des autres.

17. Véhicule d'intervention selon l'une ou plusieurs des revendications 1 à 16, caractérisé en ce que la surface orientée vers la source de lumière (17), de préférence de la deuxième branche (29), est pourvue d'une couche (57) réfléchissant la lumière, par exemple d'une couche de vernis, d'une feuille ou analogue ou d'une surface de réflexion, par exemple polie.

18. Véhicule d'intervention selon l'une ou plusieurs des revendications 1 à 17, caractérisé en ce que sont disposés dans les zones d'extrémité (58, 59) éloignées l'une de l'autre des deux branches (28, 29) de l'élément de délimitation (13) des creux en forme de rainure (60) et/ou des baguettes de butée (61) pour recevoir respectivement retenir et/ou guider les plaques de revêtement (25, 51).

19. Véhicule d'intervention selon l'une ou plusieurs des revendications 1 à 18, caractérisé en ce que la source de lumière (17), notamment les tubes fluorescents (18) prennent appui par des socles de lampe (20) à l'élément de délimitation (13).

20. Véhicule d'intervention selon l'une ou plusieurs des revendications 1 à 19, caractérisé en ce que les tubes fluorescents (18) sont disposés pour s'étendre parallèlement à la direction longitudinale de l'élément de délimitation (13).

21. Véhicule d'intervention selon l'une ou plusieurs des revendications 1 à 20, caractérisé en ce que les sources de lumière (17) sont reliées à des sources de courant différentes parallèlement ou successivement.

22. Véhicule d'intervention selon l'une ou plusieurs des revendications 1 à 21, caractérisé en ce que les sources de lumière (17) sont reliées à des accumulateurs d'énergie associés à celles-ci.

23. Véhicule d'intervention selon l'une ou plusieurs des revendications 1 à 22, caractérisé en ce que sont disposés dans la direction longitudinale de l'élément de délimitation (13) successivement des sources de lumière (17) qui sont reliées à des sources d'énergie différentes.

24. Véhicule d'intervention selon l'une ou plusieurs des revendications 1 à 23, caractérisé en ce que sont disposées entre des plaques de revêtement (25, 27) transparentes, translucides, notamment en couleur des plaques de revêtement opaques respectivement non transparentes (51), respectivement des parties de plaque.

25. Véhicule d'intervention selon l'une ou plusieurs des revendications 1 à 24, caractérisé en ce que les différentes plaques de revêtement (25, 51) respectivement parties de plaques de revêtement sont reliées les unes aux autres d'une manière étanche au liquide.

26. Véhicule d'intervention selon l'une ou plusieurs des revendications 1 à 25, caractérisé en ce que l'élément de délimitation (13) est réalisé en matière synthétique, notamment en matière synthétique renforcée par des fibres de verre ou en une résine thermodurcissable ou en une matière thermoplastique.

27. Véhicule d'intervention selon l'une ou plusieurs des revendications 1 à 26, caractérisé en ce que l'élément de délimitation (13) est constitué de plusieurs parties de profilés (69 à 71) individuelles pouvant être reliées par des dispositifs d'accouplement (72), par exemple des liaisons à enclenchement (73), des baguettes de guidage (74) ou analogue.
